# EUROPEAN PATENT APPLICATION

(11) **EP 1 550 899 A1**
(43) Date of publication of application: **06.07.2005**
(21) Application number: 03727129.3
(22) Date of filing: 14.05.2003
(51) Int. Cl.: G02F 1/13

(54) **A SILICON-BASED COLOR LIQUID CRYSTAL DISPLAY MICRODEVICE**

(30) Priority: 14.05.2002 CN 02217356
(71) Applicant: Kinoptics, Inc., Shanghai 200121 (CN)
(72) Inventor: Shao, Jianxin, Shanghai 200434 (CN); Fan, Bin, Shanghai 200122 (CN)
(74) Representative: Reinhard - Skuhra - Weise & Partner GbR
(86) International application number: PCT/CN2003/000348
(87) International publication number: WO 2003/096107

(57) **Abstract**

A color LCoS microdisplay device, consisting of a CMOS silicon backplane, a metal reflector array, a lower LC alignment layer, an LC layer, an upper LC alignment layer, a transparent conductive layer, and a cover glass plate, with a micro-dichroic-filter array between the said upper LC alignment layer and the said cover glass plate. Each pixel of the said micro-dichroic-filter array corresponds with a pixel of the said metal reflector array. And the said pixels of the said metal reflector array also serve as electrodes, which can be activated individually with a charge of DC voltage or pulse. Thus a single panel projection color display system is achieved.

## Description

### Background of the invention

This invention relates to opto-electronics, and especially to a color LCoS (liquid crystal on silicon) micro-display device.

Because of the development of high definition television (HDTV), many new display techniques have emerged, such as plasma display plate (PDP), thin film transistor (TFT), digital micromirror device (DMD), and liquid crystal on silicon (LCoS) technique. Among these techniques, LCoS is one of the most promising for its high resolution and low cost.

The prior art LCoS devices are all monochromic. For a color projection equipment, a complicated optical system had to be used to separate the illuminating white light into three primary-color (red, green, and blue) light beams, to be projected onto three conventional LCoS devices separately, and then combine the three modulated light beams into one beam to form a color image. The said optical system is quite complicated, expensive, and low-performance.

### Summary of the invention

The objective of the present invention is to provide a color LCoS micro-display device that can be used for single panel color display, thus making the optical system much simpler while enhance its performance.

Another objective of the present invention is to provide a color LCoS micro-display device with lower distortion by adjusting the form of pixels.

The present invention provides a color LCoS micro-display device consisting of a silicon backplane with IC structure, a metal reflector array, a lower liquid crystal (LC) alignment layer, an LC layer, an upper LC alignment layer, a transparent conductive layer, a micro dichroic filter array, and a cover glass plate. The said silicon backplane, metal reflector array, lower LC alignment layer, LC layer, upper LC alignment layer, transparent conductive layer, and cover glass plate are sealed together in the foregoing sequence, with the said micro dichroic filter array located between the said upper LC alignment layer and the said cover glass plate. The space between the two LC alignment layers is 0.5µm to 10µm. The form and size of each pixel of the said micro dichroic filter array is the same as or similar to that of the corresponding pixel of the said metal reflector array, and the said corresponding pixels are aligned together during packaging. Every pixel of the said metal reflector array is also an electrode and can be driven by applying a dc voltage or pulse through the IC under the said silicon backplane.

When a white linear polarized light beam irradiates on the device of the present invention, part of the light is reflected by the said micro dichroic filter array without changing its polarization, while the other part of the light penetrates the said micro dichroic filter array and the said LC layer, and then is reflected by the said metal reflector array with a rotation of its polarization direction depending on the said dc voltage or the width of the pulse applied on the said pixels of the metal reflector array. Thus, a polarization beam splitter (PBS) can be used to separate the said part of the light reflected from the said micro dichroic filter array directly, and the said part of the light reflected from the said metal reflector array. Because the said part of the light reflected from the said metal reflector array is modulated to carry image information, it can be projected out for color display through the said projection lens. And the said part of the light reflected from the said micro dichroic filter array directly can be recycled by a recycle equipment to increase optical efficiency.

The present invention gives a new single panel color display solution by inserting a micro dichroic filter array into the LCoS device. It simplifies the color projection system greatly, thus reducing the size and cost, increasing the efficiency and reliability.

The said micro dichroic filter array, located between the said upper LC alignment layer and the said transparent conductive layer, or between the said transparent conductive layer and the said cover glass plate, comprises three micro dichroic filters that are red, green, and blue in color. The three micro filters transmit red, green and blue region light separately, and reject light of other spectrum. Every said micro filter comprises multilayer of two or more dielectric material with different refractive index. The total thickness is approximately 1µm to 5µm.

There is an opaque coating of such materials as Al, Cr, Ni, Cu, or their alloy in the space between each pair of adjacent micro filters, which measures approximately 0.3 to 1µm, for the reduction of leakage. It can further improve the image quality, increase the contrast, and extend the lifetime of the device.

A further objective of the present invention is to improve the color balance of the said device by adjusting the area of pixels of each color of the said micro dichroic filter array. For example, the basic structure of the said micro dichroic filter array is a square comprising three rectangles of red, green, and blue micro filters, and the areas of the said three rectangles can be the same or different according to the color balance.

Another example is that the basic structure of the said micro dichroic filter array is a hexagon comprising three parallelograms of red, green, and blue micro filter, and the said array is a honeycomb form of many of the said hexagon basic structures.

The effective length of the said hexagon basic structure is arranged to be very close to its effective width by adjusting the internal angles and the side length of the said parallelograms, so that the display image will not be distorted. And the areas of the red, green, blue pixels are different to keep the color balance.

### Brief Description of the Drawings

FIG 1 is the cross-section of the present invention's color micro-display device.
FIG 2 is the form and arrangement of the micro dichroic filter array of the present invention's color micro-display device. (a. square structure; b. honeycomb structure)
FIG 3 is a example of the honeycomb structure micro dichroic filter array's pixel form.

### Detailed Description

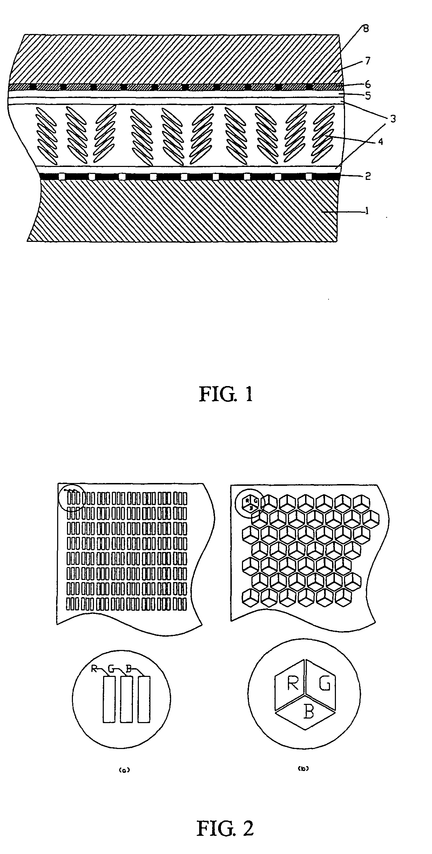

Referring to the drawings, FIG 1 is the cross-section of the present invention's color micro-display device. The said color micro-display device comprises a silicon backplane (1) with IC structure, a metal reflector array (2), an LC layer (4) sandwiched between two LC alignment layers (3), a transparent conductive layer (5), a three premier color micro dichroic filter array (6), and a cover glass plate (7). The said micro dichroic filter array (6) can be located between the said transparent conductive layer (5) and the said cover glass plate (7) (as shown in Fig 1). It can also be located between the upper LC alignment layer (3) and the said transparent conductive layer (5). The space between the said two LC alignment layers (3) is about 0.5µm to 10µm, preferably 1µm to 6µm, or 2µm to 3µm for best results. The amount, form, size and arrangement of the pixels of the said micro dichroic filter array (6) correspond to that of the said metal reflector array (2) coated on the said silicon backplane (1). And the pixels of both said micro dichroic filter array (6) and the said metal reflector array (2) are aligned together. Each pixel of the said micro dichroic filter array (6) is made of multilayer dielectric optical coatings, which transmit the three premier color, i.e. red, green, and blue, separately, while reflecting other spectrum visible light. Each pixel of the said metal reflector array (2) is not only a micro-reflector but also a micro-electrode, which can be selected by the IC under the said silicon backplane (1) to apply a voltage or pulse. The spacer (8) between the said pixels of the said micro dichroic filter array (6) is about 0.3µm to 1µm, and the spacer (8) should be coated with an opaque material, such as Al, Cr, Ni, Cu, or their alloy, to avoid light leakage.

For manufacturing processing, a silicon substrate (1) (about 10mm to 50mm diagonal) was made on addressable pixel array through standard CMOS process, and then coated the pixels with metal reflector (2), such as aluminum. A transparent glass substrate (7), similar in size to the silicon substrate (1), was coated on red, green, and blue micro dichroic filter array (6) by the combination of photolithography and vacuum coating deposition. The coated glass substrate, after planarization, was then coated a transparent conductive layer (5). Both the coated glass substrate and the coated silicon chip are coated LC alignment layer (3) (PI or the like), and are processed (mechanical rub or the like) for alignment. The said two processed substrates are sealed together face to face with a cell gap of 0.5µm to 10µm between them. The corresponding pixels of the said micro dichroic filter array and the said metal reflector array are aligned together, and the cell is then filled with suitable LC material (4), which complete the present invention's color LCoS device.

FIG 2 is the form and arrangement of the micro dichroic filter array of the present invention's color micro-display device. In FIG 2a, every pixel of the said micro dichroic filter array is a rectangle, while the basic structure of the said micro dichroic filter array is a square comprising three pixels of red, green, and blue, respectively. Because the said basic structure, which is corresponding to an image pixel, is a square, the image will not be distorted. The color saturation of the image can be adjusted by adjusting the ratio of the relative width of the RGB pixels, which can be used to compensate some color loss caused by the light source or the optical system. However, after the compensation, the ratio of the length to width of some pixels will be large, which will cause some manufacturing difficulty, especially for high-resolution devices, where pixel size is close to the manufacturing limitation.

FIG 2b is another example of the form and arrangement of the said micro dichroic filter array. The basic structure of the said micro dichroic filter array is a hexagon comprising three pixels in parallelogram with red, green, and blue. And the whole array is arranged with a honeycomb structure of the said basic structure in hexagon. The effective length of the said hexagon may be close to its width by adjusting the internal angle and side lengths of the said hexagon, which can prevent distortion.

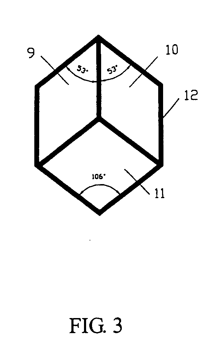

FIG 3 is a special example of the honeycomb structure as shown in FIG 2b. The basic structure is the hexagon comprising three diamond-shaped RGB pixels with a side length of about 4µm to 10µm. The form of green pixel (9) and blue pixel (10) are identical, i.e., both have an internal angle of 50° to 56°, preferable 53 °. And the form of the other pixel, red pixel, is a diamond with an internal angle of 70 ° to 78 °, preferable 74 °. Thus, the area of the red pixel is slightly more than that of the green or the blue one, which might compensate the less red spectrum of conventional UHP lamp.

It is to be understood that the invention is not limited to features and embodiments hereinabove specifically set forth, but may be carried out in other ways without departure from its spirit.

## Claims

1. A color micro-display device based on liquid crystal on silicon (LCoS), comprising:
a silicon substrate with CMOS IC structure;
a metal reflector array;
a lower alignment layer;
a liquid crystal layer;
an upper alignment layer;
a transparent conductive layer;
a micro dichroic filters array;
a cover glass plate; and:
a. wherein the said silicon substrate including the said metal reflector array and the said lower alignment layer, the said liquid crystal layer, the said cover glass plate including the said upper alignment layer and the transparent conductive layer, are sealed into one package, with the said micro dichroic filters array located between the said upper alignment layer and the said cover glass plate, and the distance between the said two alignment layers is between 0.5µm and 10µm;
b. the size and shape of each pixel of the said micro dichroic filters array are the same as or similar to the ones of each pixel of the said metal reflector array, and each pixel of the said micro dichroic filters array corresponds with a pixel of the said metal reflector array;
c. each pixel of the said metal reflector array is also an electrode, which can be activated by applying a dc voltage or an electronic pulse on it through the said CMOS IC under the said silicon substrate.

2. A color LCoS display device in accordance with Claim 1, wherein the said distance between the said two alignment layers is between 1µm to 6µm.

3. A color LCoS display device in accordance with Claim 2, wherein the said distance between the said two alignment layers is between 2µm to 4µm.

4. A color LCoS display device in accordance with Claim 1, wherein the said micro dichroic filters array is located between the said upper alignment layer and the said transparent conductive layer.

5. A color LCoS display device in accordance with Claim 1, wherein the said micro dichroic filters array is located between the said transparent conductive layer and the said cover glass plate.

6. A color LCoS display device in accordance with Claim 4 or 5, wherein the said micro dichroic filters array comprises three kinds of dichroic filters corresponding to the three primary colors, i.e. RGB, and each filter comprises multilayer of alternating dielectric thin film layers of at least two kinds of dielectric materials with different refractive index, and the total thickness of the said multilayer is between 1µm to 5µm.

7. A color LCoS display device in accordance with Claim 4 or 5, wherein the spacing between every two of the said micro dichroic filters is between 0.3µm to 1µm, and the said spacing area is coated with opaque materials, such as aluminum, chromium, nickel, copper, iron, zinc, titanium, gold, silver, platinum, tungsten, molybdenum, tantalum, zirconium, carbon, and their alloy.

8. A color LCoS display device in accordance with Claim 4 or 5, wherein the shape of every basic cell of the said micro dichroic filters array is a square comprising three rectangular dichroic filters (RGB each).

9. A color LCoS display device in accordance with Claim 8, wherein the areas of the said rectangular dichroic filters with different colors (RGB) are different.

10. A color LCoS display device in accordance with Claim 4 or 5, wherein the shape of every basic cell of the said micro dichroic filters array is hexagon comprising three dichroic filters (RGB each) with parallelogram shape, and the whole array comprises the said basic cells with a honeycomb structure.

11. A color LCoS display device in accordance with Claim 10, wherein the areas of the said parallelogram shape dichroic filters with different colors (RGB) are different.

12. A color LCoS display device in accordance with Claim 11, wherein the shape of every RGB dichroic filter is rhomb, and the shape of two of the rhombs are identical with one internal angel between 50° to 56°, while the other rhomb has an internal angel between 70° to 78°.
